# FASCICULE DE BREVET EUROPEEN

(11) **EP 1 752 597 B1**
(45) Date de publication et mention de la délivrance du brevet: **22.12.2010**
(21) Numéro de dépôt: 06016398.7
(22) Date de dépôt: 07.08.2006
(51) Int. Cl.: E04F 10/06, E06B 9/68

(54) **Procédé de commande d'un dispositif domotique comprenant un écran sensible au vent et dispositif domotique pour sa mise en oeuvre**
Verfahren zum Betrieb einer automatisierten Heimvorrichtung bestehend aus einem windempfindlichen Schutzschirm und einer Heimsteuereinrichtung für seinen Betrieb
Process for controlling a home automation device with a wind sensible screen and home automation device for its control

(30) Priorité: 09.08.2005 FR 0508461
(43) Date de publication de la demande: 14.02.2007
(73) Titulaire: Somfy SAS, 74300 Cluses (FR)
(72) Inventeur: Dupielet, Norbert, 74700 Sallanches (FR); Fournet, Michel, 74350 Cuvat (FR); Lagarde, Eric, 74700 Sallanches (FR); Maraval, Frédéric, 74190 Passy (FR)
(74) Mandataire: Bugnion Genève

(56) Documents cités:
- EP-A- 0 969 161
- DE-A1- 4 009 373

## Description

L'invention concerne un procédé de commande d'un dispositif domotique comprenant un écran sensible au vent et un capteur de mesure des effets du vent sur l'écran. L'invention concerne également un dispositif domotique pour mettre en oeuvre ce procédé.

La protection des stores contre les effets du vent est une fonction recherchée par les fabricants. En effet, en cas de bourrasques, la toile du store offre une grande prise au vent et sollicite fortement la structure du store. Celle-ci peut de ce fait se détériorer. De plus, d'un point de vue sécuritaire, il est primordial que le store reste solidement fixé à la structure du bâtiment qu'il équipe. La norme EN13561 spécifie d'ailleurs les contraintes à respecter.

Pour répondre à cette exigence, plusieurs moyens sont connus. Tous utilisent, en premier lieu, la mesure d'une grandeur caractéristique du vent comme par exemple sa vitesse.

Classiquement, cette mesure est réalisée par un anémomètre indépendant du store, positionné à un endroit stratégique. Un premier inconvénient de cette utilisation vient du fait que la vitesse mesurée par l'anémomètre n'est pas nécessairement égale à la vitesse du vent au niveau du store. Un deuxième inconvénient vient du fait qu'un anémomètre ne mesure que la composante de la vitesse du vent dans un plan et que les stores à bras sont particulièrement sensibles aux composantes du vent perpendiculaires à la toile.

Pour pallier à ce problème, d'autres moyens ont été utilisés. Avec ces moyens, la mesure de la vitesse du vent ou de ces conséquences est ramenée au niveau du store, soit dans la barre de charge, comme décrit dans la demande EP 1 122 378, soit au niveau du tube d'enroulement, comme décrit dans les demandes DE 44 07 342 et EP 0 969 161. Différents capteurs peuvent alors être employés, notamment un capteur piézo-électrique, un capteur électromagnétique ou un accéléromètre.

Il est intéressant de placer le capteur au niveau de la barre de charge. En effet, lorsque la toile est sollicitée par le vent, l'amplitude de la déformation du store est amplifiée au niveau de la barre de charge. La mesure effectuée à ce niveau est donc plus sensible et plus facilement interprétable. Cependant, à cet endroit, il est difficile d'alimenter le capteur.

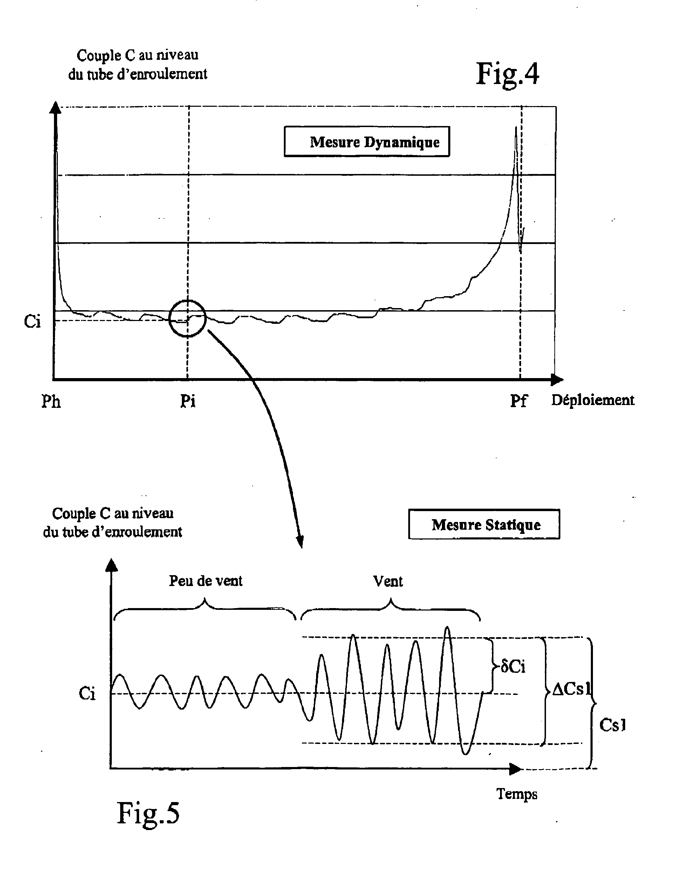

Il est intéressant de placer le capteur au niveau du tube d'enroulement du store. Il est alors possible de le coupler avec l'actionneur commandant le store. L'installation est simplifiée, aucune alimentation supplémentaire n'étant requise. L'inconvénient réside dans la sensibilité de la mesure. Contrairement à ce qui a été décrit précédemment, la déformation du store n'est pas amplifiée au niveau du tube d'enroulement. La mesure nécessite donc de la précision et l'interprétation devient délicate (risque d'effet parasite). Cette difficulté est encore plus grande quand la mesure est effectuée lorsque le store est en cours de mouvement de déploiement. En effet, dans le cas où comme représenté sur la figure 4, on mesure le couple mécanique C, au niveau du tube d'enroulement d'un store entre la position complètement repliée Ph et une position déployée Pf pour déterminer la force du vent, on est confronté à de nombreux paramètres perturbant la mesure tels que notamment des frottements, des points durs, des variations de diamètre d'enroulement, des variations d'efforts de traction des ressorts dans les bras et des forces d'inertie. Ces paramètres font que même en l'absence de vent le couple mesuré n'est pas constant.

La protection des stores peut être obtenue par le biais de différents scénarii. Le scénario le plus courant est le repli du store lorsque, une fois l'écran entièrement déployé, le capteur détecte un effort supérieur à un seuil prédéfini. La mesure est alors statique, c'est-à-dire faite alors que l'écran du store est à l'arrêt. Dans cette position, le store est très vulnérable au vent.

Dans le brevet EP 0 969161, un scénario utilise trois seuils. Une grandeur représentative de la force du vent agissant sur la toile du store est mesurée en continu, la mesure est dite dynamique. Si cette grandeur dépasse un seuil dit de danger, un ordre de repli du store est effectué jusqu'à atteindre une position où l'effort devient inférieur à un seuil dit de sécurité. Si la grandeur passe en dessous d'un seuil dit de tout-va-bien, le store se déploie de nouveau, tant qu'il ne dépasse pas le seuil de sécurité.

Le brevet DE 40 09 373 décrit un autre scénario. A partir d'une mesure absolue de la vitesse du vent, la toile du store est amenée dans l'une des quatre positions prédéfinies et correspondant à un seuil de vitesse. Dès qu'un seuil de vitesse de vent est franchi, la toile est déplacée d'une position prédéterminée à une autre.

Comme vu précédemment, lorsque le capteur de vent est intégré au store, l'effort peut être mesuré en « dynamique » ou en « statique ». Dans le premier cas, il est préférable d'effectuer la mesure au niveau de la barre de charge pour augmenter la sensibilité. Si le capteur, est au niveau du tube d'enroulement, la mesure est alors imprécise, voire impossible tant que le store n'a pas atteint une certaine position, celle-ci pouvant déjà être dangereuse pour la résistance du store. Dans le cas d'une mesure « statique », l'art antérieur décrit des scénarii où la mesure est effectuée quand le store est dans une position d'utilisation.

Le but de l'invention est de fournir un procédé de commande d'un dispositif comprenant un écran mobile palliant aux inconvénients précités et améliorant les procédés connus de l'art antérieur. En particulier, le procédé de commande selon l'invention permet l'utilisation d'un capteur de vent intégré dans le tube d'enroulement de l'écran et ne présentant pas les soucis de sensibilité et de sécurité habituellement lié à cette architecture.

Le procédé de commande selon l'invention est caractérisé par la partie caractérisante de la revendication 1.

Différents modes d'exécution du procédé selon l'invention sont définis par les revendications dépendantes 2 à 7.

Le dispositif domotique selon l'invention est défini par la revendication 8.

Le dessin annexé représente, à titre d'exemple, un mode de réalisation d'un store à bras selon l'invention et deux modes d'exécution d'un procédé de commande selon l'invention.
La figure 1 est un schéma d'un store à bras pour la mise en oeuvre du procédé de commande selon l'invention.
La figure 2 est un ordinogramme d'un premier mode d'exécution du procédé de commande selon l'invention.
La figure 3 est un ordinogramme d'un deuxième mode d'exécution du procédé de commande selon l'invention.
La figure 4 est un graphique représentant le couple mesuré au niveau du tube d'enroulement en fonction du déploiement de la toile, la mesure étant faite en dynamique c'est-à-dire pendant que la toile se déploie.
La figure 5 est un graphique représentant le couple mesuré au niveau du tube d'enroulement lorsque la toile a atteint une position intermédiaire Pi, la mesure étant faite en statique c'est-à-dire pendant que l'actionneur du store est à l'arrêt.

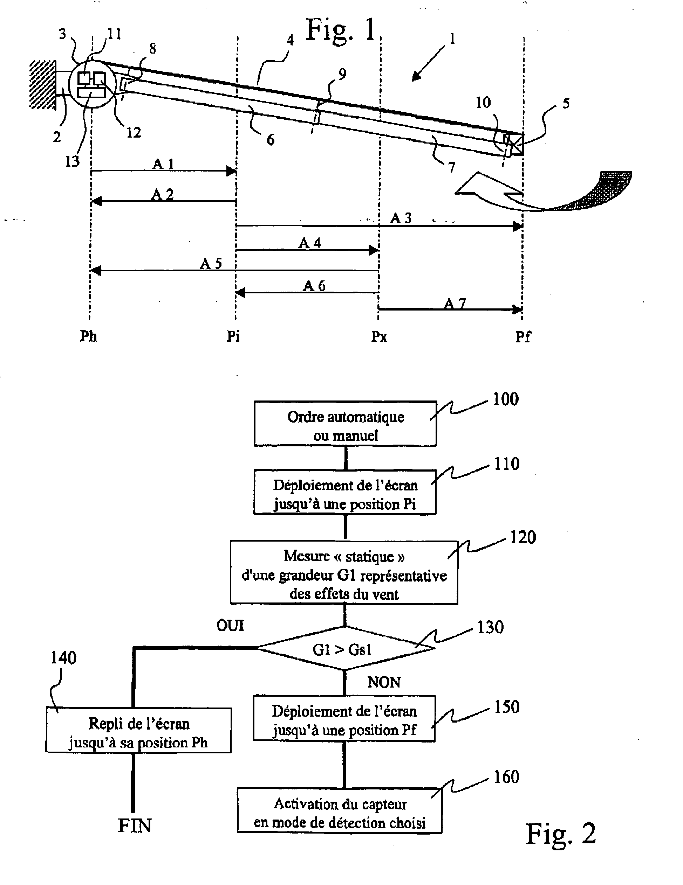

Le store à bras 1 représenté à la figure 1, comprend un support 2, monté sur la structure d'un bâtiment, un tube d'enroulement 3 entraîné par un moteur sur lequel une toile 4 vient s'enrouler et une barre de charge 5 reliée au support 2 par l'intermédiaire de bras articulés.

Les bras articulés comprennent deux segments 6, 7, le premier segment étant articulé à l'une de ses extrémités au support 2 autour d'un premier axe 8, et à l'autre de ses extrémités à l'une des extrémités du deuxième segment 7 autour d'un second axe 9. L'autre extrémité du second segment 7 est quant à elle articulée à la barre de charge 5 autour d'un troisième axe 10.

La toile 4 est fixée d'un coté au tube d'enroulement 3 et de l'autre côté à la barre de charge 5 de manière à permettre son enroulement sur le tube d'enroulement 3 ou son déroulement depuis le tube 3 par des moyens d'actionnement, comme par exemple un moteur 11 dont l'alimentation est pilotée par une unité électronique de commande 13. Sur la figure 1, la toile est représentée dans un état déroulé.

Ce store est équipé de moyens de sécurité comprenant notamment un capteur 12 placé soit au niveau de la barre de charge 5, soit au niveau du tube d'enroulement 3. Ce capteur 12 permet une détection directe des effets du vent sur la toile, par exemple en mesurant un couple mécanique dans la chaîne cinématique entre la structure du bâtiment et le tube d'enroulement.

Un premier mode d'exécution du procédé de commande selon l'invention pouvant notamment être appliqué au store décrit précédemment est décrit en référence aux figures 1 et 2.

Dans une première étape 100, un ordre de déploiement de la toile est transmis au store de manière automatique ou manuelle. Un ordre peut par exemple être transmis au store de manière automatique lorsque celui-ci est équipé d'un capteur de soleil et que la valeur mesurée par celui-ci dépasse un seuil déterminé. Un ordre peut par exemple être transmis au store de manière manuelle lorsqu'un utilisateur appui sur un bouton de commande d'une interface de commande appairée au store.

Dans une deuxième étape 110 déclenchée par la première étape, la toile du store est déployée jusqu'à atteindre une première position intermédiaire Pi. Dans le cas où la toile est initialement complètement enroulée, cette action est représentée sur la figure 1 par une flèche A1. Cette première position intermédiaire Pi est particulière dans le sens où elle correspond à une distance minimum de déploiement du store pour laquelle une mesure « statique » (sans mouvement motorisé de l'écran au moment de la mesure) s'avère pertinente et exploitable par le capteur. Cette position est variable en fonction des dimensions du store. Cette position intermédiaire peut être légèrement supérieure à la distance minimum pour obtenir une mesure pertinente si l'on souhaite améliorer la sensibilité de la mesure. Cette distance correspond par exemple à la moitié de la course de la toile.

Dans une étape 120, la toile ayant atteint la position intermédiaire Pi, la .. mesure statique d'une grandeur G1 correspondant à l'effet du vent sur la toile et représentative de la vitesse du vent est effectuée. Cette grandeur est par exemple un couple mécanique mesurée par le capteur 12. L'opération consiste à enregistrer un signal pendant une durée déterminée. Ce signal est généralement sinusoïdal. Son amplitude varie en fonction de la vitesse du vent. La grandeur G1 mesurée correspond généralement à l'amplitude du signal mais cela peut également être la pente d'une sinusoïde ou tout autre grandeur permettant de caractériser la vitesse du vent. Dans le but de conforter la mesure, il est préférable d'effectuer plusieurs relevés de cette grandeur et d'en déduire une valeur représentative (qui peut être par exemple une moyenne, une interpolation ou le maximum de ces relevés). C'est pourquoi, la durée déterminée de l'enregistrement est, par exemple, de l'ordre de 5 secondes (cela correspond à environ 5 périodes de sinusoïde). Le graphique de la figure 5 représente cette phase d'enregistrement. Dans le cas représenté, on mesure, en fonction du temps, le couple C au niveau du tube d'enroulement du store, le moteur 11 se trouvant à l'arrêt. Sur la gauche du graphique, lorsqu'il y a peu de vent, l'amplitude des oscillations du couple mesuré autour d'une valeur moyenne Ci est faible. Sur la droite du graphique, lorsque le vent est plus fort, l'amplitude des oscillations est plus importante et la valeur maximale de l'amplitude dépasse même une valeur d'amplitude seuil prédéfinie ΔCs1. Alternativement, lorsque le vent est plus fort, le couple C peut dépasser une valeur seuil prédéfinie Cs1 ou dépasser une valeur seuil définie par la relation Ci+δCi, δCi étant prédéfini. Il est clair qu'on peut détecter la présence de vent en utilisant d'autres paramètres du signal mesuré.

Dans une étape de test 130, la mesure effectuée à l'étape précédente est utilisée. Si la grandeur mesurée est supérieure à un seuil prédéfini Gs1 (par exemple l'amplitude des oscillations du couple C est supérieure au seuil d'amplitude ΔCs1), un ordre de repli de la toile est exécuté dans une étape 140 : la toile s'enroule jusqu'à sa position haute Ph. Cette action est représentée par une flèche A2 sur la figure 1. Cette action est prioritaire.

Si la grandeur mesurée est inférieure au seuil prédéfini Gs1, alors, dans une étape 150, un ordre de déploiement de l'écran est exécuté, la toile se déploie jusqu'à la position Pf souhaitée et indiquée dans l'ordre de commande de l'étape 100. Cette position peut être celle dans laquelle la toile est complètement déployée. Dans ce cas, cette action est représentée sur la figure 1 par une flèche A3. Cette position peut aussi être toute position intermédiaire d'utilisation définie.

Dans une étape 160, le capteur est placé dans un mode de détection. Ce mode de détection peut être du type à activation à intervalle de temps régulier ou du type à activation lorsque les effets du vent sur l'écran dépassent un certain seuil. L'activation peut par exemple être réalisée comme décrit de la ligne 1 de la page 9 à la ligne 4 de la page 12 dans la publication de la demande WO 02/04960A1.

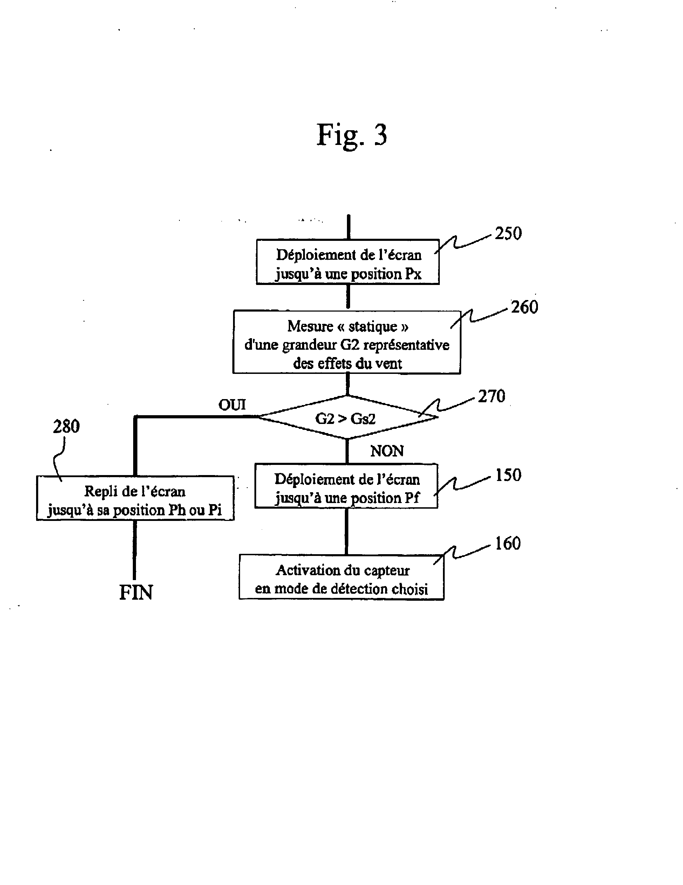

Un deuxième mode de réalisation du procédé de commande selon l'invention est décrit en référence à la figure 3.

Ce deuxième mode de réalisation diffère du premier mode en ce que des étapes (250 à 280) sont intercalées entre les étapes 130 et 150 du premier mode.

Dans une étape 250 faisant suite à l'étape 130, la toile du store est déployée jusqu'à atteindre une deuxième position intermédiaire Px. Cette action est représentée sur la figure 1 par une flèche A4. Cette deuxième position intermédiaire Px est choisie de manière à permettre de préciser la mesure effectuée à l'étape 120 pour pouvoir commander le store avec une sécurité accrue. Cette position est variable en fonction des dimensions du store.

Dans une étape 260, la toile ayant atteint la position intermédiaire Px, la mesure statique de la grandeur G2 correspondant à l'effet du vent sur la toile et représentative de la vitesse du vent est effectuée. Cette grandeur est par exemple un couple mécanique mesurée par le capteur 12.

Dans une étape de test 270, la mesure effectuée à l'étape précédente est utilisée. Si la grandeur mesurée est supérieure un seuil prédéfini Gs2, un ordre de repli de la toile est exécuté dans une étape 280 : la toile s'enroule par exemple jusqu'à sa position haute Ph ou jusqu'à sa première position intermédiaire Pi. Cette action est représentée par l'une des flèches A5 et A6 sur la figure 1. Cette action est prioritaire.

Si la grandeur mesurée est inférieure au seuil prédéfini Gs2, alors, dans une étape 150, un ordre de déploiement de l'écran est exécuté, la toile se déploie jusqu'à la position Pf souhaitée et indiquée dans l'ordre de commande de l'étape 100. Cette position peut être celle dans laquelle la toile est complètement déployée. Dans ce cas, cette action est représentée sur la figure 1 par une flèche A7. Cette position peut aussi être toute position intermédiaire d'utilisation définie.

Le procédé selon l'invention a été décrit ci-dessus avec une position intermédiaire et avec deux positions intermédiaires dans lesquelles, on effectue une mesure des effets du vent sur le store. Il est évident que le nombre de ces positions intermédiaires peut être supérieur à deux.

Les deux modes d'exécution du procédé ont été décrits lorsqu'ils s'appliquent à un store à bras et toile enroulable. Il est cependant clair que le procédé peut être appliqué à tout dispositif domotique comprenant un écran sensible au vent.

## Revendications

1. Procédé de commande d'un dispositif domotique (1) comprenant un écran (4) sensible au vent et un capteur (12) de mesure de l'effet du vent sur l'écran, **caractérisé en ce qu'**il comprend, suite à un ordre de déploiement de l'écran jusqu'à une position souhaitée (Pf), les étapes suivantes :
a) déployer l'écran jusqu'à atteindre une première position intermédiaire (Pi),
b) mesurer l'effet du vent sur l'écran, sans que l'écran soit soumis à un mouvement motorisé au moment de la mesure,
c) si l'effet du vent est supérieur à un seuil fixé (Gs1), replier l'écran et, si l'effet du vent est inférieur ou égal au seuil fixé, déployer l'écran au-delà de la première position intermédiaire.

2. Procédé selon l'une des revendications précédentes, **caractérisé en ce que** les étapes a), b) et c) sont itérées dans la deuxième proposition de l'étape c) avec différentes positions intermédiaires (Px).

3. Procédé selon la revendication 1 ou 2, **caractérisé en ce que** le déploiement de l'écran est commandé de manière automatique.

4. Procédé selon la revendication 1 ou 2, **caractérisé en ce que** le déploiement de l'écran est commandé de manière manuelle.

5. Procédé selon l'une des revendications précédentes, **caractérisé en ce que** la mesure de l'effet du vent sur l'écran est effectuée au niveau d'un tube d'enroulement de l'écran.

6. Procédé selon l'une des revendications précédentes, **caractérisé en ce que** la première position intermédiaire (Pi) se situe entre le quart et les trois quarts de la course totale de l'écran.

7. Procédé selon l'une des revendications précédentes, **caractérisé en ce que** lorsque l'écran atteint la position souhaitée (Pf), le capteur de mesure de l'effet du vent sur l'écran entre dans l'un des modes de détection suivant :
- activation à intervalle de temps régulier,
- activation lorsque l'effet du vent sur l'écran dépasse un certain seuil.

8. Dispositif domotique (1) comprenant un écran (4) sensible au vent et un capteur (12) de mesure de l'effet du vent sur l'écran, **caractérisé en ce qu'**il comprend des moyens matériels (13, 11) et logiciels pour mettre en oeuvre le procédé selon l'une des revendications précédentes.

## Claims

1. Method for controlling a home automation device (1), including a wind sensitive screen (4) and a sensor (12) for measuring the influence of the wind on the screen, **characterised in that** the method comprises, following a command for moving out the screen until a desired position (Pf), the following steps:
a) moving out the screen until a first intermediate position (Pi),
b) measuring the influence of the wind on the screen without submitting the screen to a motorised movement at the time of measuring,
c) retracting the screen when the influence of the wind exceeds a fixed threshold value (Gs1), and moving out the screen further than the first intermediate position when the influence of the wind is less than or equal to the fixed threshold value.

2. Method according to one of the preceding claims, **characterised in that** the steps a), b) and c) are repeated for the second proposition in step c) using different intermediate positions (Px).

3. Method according to claim 1 or 2, **characterised in that** the moving out of the screen is controlled automatically.

4. Method according to claim 1 or 2, **characterised in that** the moving out of the screen is controlled manually.

5. Method according to one of the preceding claims, **characterised in that** the measure of the influence of the wind on the screen is executed at the level of a rolling-up tube of the screen.

6. Method according to one of the preceding claims, **characterised in that** the first intermediate position (Pi) is situated between the fourth and three fourths of the total path of the screen.

7. Method according to one of the preceding claims, **characterised in that** the sensor for measuring the influence of the wind on the screen enters into one of the following detection modes when the screen has reached the desired position (Pf):
- activation at regular time intervals,
- activation when the influence of the wind on the screen exceeds a determined threshold.

8. Home automation device (1), including a wind sensitive screen (4) and a sensor (12) for measuring the influence of the wind on the screen, **characterised in that** it comprises hardware means (13, 11) and software means for carrying out the method according to one of the preceding claims.

## Patentansprüche

1. Verfahren zur Steuerung einer haustechnischen Vorrichtung (1), welche einen auf Wind empfindlichen Schirm (4) und einen Sensor (12) zur Messung der Einwirkung des Windes auf den Schirm aufweist, **dadurch gekennzeichnet, dass** das Verfahren anschliessend an einen Steuerbefehl zum Ausfahren des Schirms bis zu einer gewünschten Stellung (Pf) folgende Schritte enthält:
a) Ausfahren des Schirms bis zum Erreichen einer ersten Zwischenstellung (Pi),
b) Messen der Einwirkung des Windes auf den Schirm, wobei zum Zeitpunkt der Messung keine motorgetriebene Bewegung des Schirms bewirkt wird,
c) Einfahren des Schirms, falls die Einwirkung des Windes stärker als ein fester Schwellenwert (Gs1) ist, und Ausfahren des Schirms über die erste Zwischenstellung hinaus, falls die Einwirkung des Windes schwächer oder gleich dem festen Schwellenwert ist.

2. Verfahren nach einem der vorstehenden Ansprüche, **dadurch gekennzeichnet, dass** die Verfahrensschritte a), b) und c) im zweiten Falle des Schrittes c) mit unterschiedlichen Zwischenstellungen (Px) wiederholt ausgeführt werden.

3. Verfahren nach Anspruch 1 oder 2, **dadurch gekennzeichnet, dass** das Ausfahren des Schirms automatisch gesteuert wird.

4. Verfahren nach Anspruch 1 oder 2, **dadurch gekennzeichnet, dass** das Ausfahren des Schirms von Hand vorgenommen wird.

5. Verfahren nach einem der vorstehenden Ansprüche, **dadurch gekennzeichnet, dass** die Messung der Einwirkung des Windes auf den Schirm in Höhe eines Rohres ausgeführt wird, auf welchem der Schirm aufgerollt ist.

6. Verfahren nach einem der vorstehenden Ansprüche, **dadurch gekennzeichnet, dass** die erste Zwischenstellung (Pi) zwischen einem Viertel und drei Vierteln des Gesamtweges des Schirmes liegt.

7. Verfahren nach einem der vorstehenden Ansprüche. **dadurch gekennzeichnet, dass** der Sensor zur Messung der Einwirkung des Windes auf den Schirm nach dessen Erreichen der gewünschten Stellung (Pf) in einen der folgenden Betriebsmodi zur Ermittlung schaltet:
- Aktivierung mit regelmässigen Zeitintervallen,
- Aktivierung, wenn die Einwirkung des Windes auf den Schirm einen bestimmten Schwellenwert überschreitet.

8. Haustechnische Vorrichtung (1), welche einen Schirm (4), der auf Wind empfindlich ist, und einen Sensor (12) zum Messen der Einwirkung des Windes auf den Schirm aufweist, **dadurch gekennzeichnet, dass** sie Hardware (13, 11) und Software zur Ausführung des Verfahrens nach einem der vorstehenden Ansprüche enthält.
